(19) Europäisches Patentamt
European Patent Office
Office européen des brevets

(11) Veröffentlichungsnummer: **0 016 931**
**B1**

(12) # EUROPÄISCHE PATENTSCHRIFT

(45) Veröffentlichungstag der Patentschrift: **18.04.84**

(51) Int. Cl.[3]: **C 09 B 62/24,** D 06 P 3/10, D 06 P 3/66

(21) Anmeldenummer: **80100534.9**

(22) Anmeldetag: **04.02.80**

(54) **Azoreaktivfarbstoffe sowie deren Verwendung zum Färben und Bedrucken von amid- und hydroxylgruppenhaltigen Materialien.**

(30) Priorität: **17.02.79 DE 2906191**

(43) Veröffentlichungstag der Anmeldung: **15.10.80 Patentblatt 80/21**

(45) Bekanntmachung des Hinweises auf die Patenterteilung: **18.04.84 Patentblatt 84/16**

(84) Benannte Vertragsstaaten: **CH DE FR GB**

(56) Entgegenhaltungen:
**FR - A - 2 392 084**
**LU - A - 59 203**
**US - A - 3 822 263**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen (DE)**
Erfinder: **Klauke, Erich, Dr., Eichendorffweg 8, D-5068 Odenthal (DE)**

**EP 0 016 931 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Azoreaktivfarbstoffe sowie deren Verwendung zum Färben und Bedrucken von amid- und hydroxylgruppenhaltigen Materialien

Gegenstand der Erfindung sind Reaktivfarbstoffe der im folgenden aufgeführten Gruppen 1 bis 7:

1. Farbstoffe der Formel

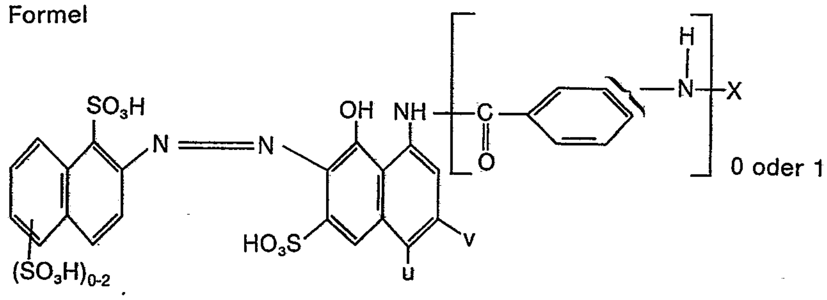

worin
u und v = H oder $SO_3H$ und u und v verschieden sind,
X = 2-Fluor-5,6-dichlorpyrimidin-4-yl.

2. Farbstoffe der Formel

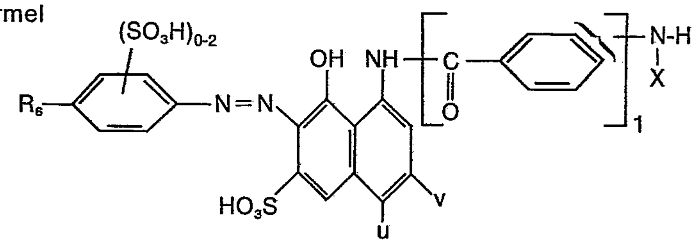

worin
u und v = H oder $SO_3H$ und
u und v verschieden sind,
$R_6$ = H, $C_1$–$C_4$-Alkyl, $C_1$–$C_4$-Alkoxy, Cl oder Acetylamino,
X = 2-Fluor-5,6-dichlorpyrimidin-4-yl.

3. Farbstoffe der Formel

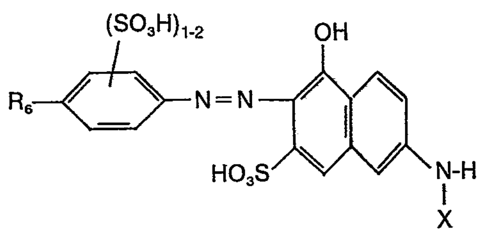

worin
$R_6$ = H, $C_1$–$C_4$-Alkyl, $C_1$–$C_4$-Alkoxy, Cl, Acetylamino,
X = 2-Fluor-5,6-dichlorpyrimidin-4-yl.

4. Farbstoffe der Formel

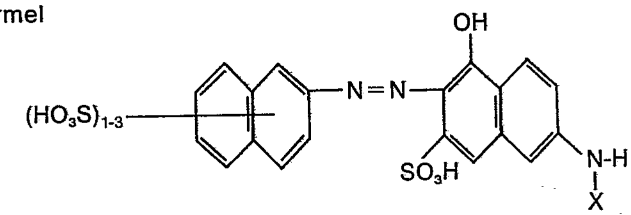

worin
X = 2-Fluor-5,6-dichlorpyrimidin-4-yl.

5. Farbstoffe der Formel

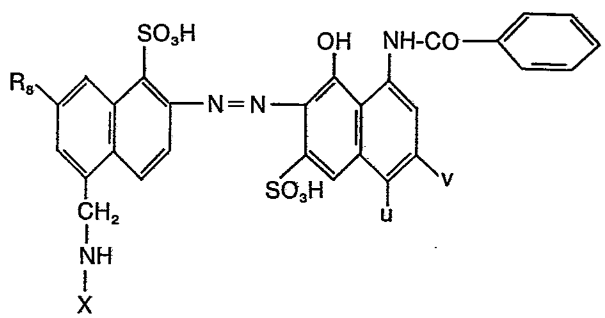

worin
$R_8$ = H oder $SO_3H$

u ≠ v und gleich H oder $SO_3H$
X = 2-Fluor-5,6-dichlorpyrimidin-4-yl.

6. Farbstoffe der Formel

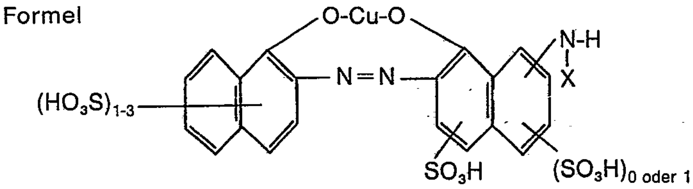

worin
X = 2-Fluor-5,6-dichlorpyrimidin-4-yl.

7. Farbstoffe der Formel

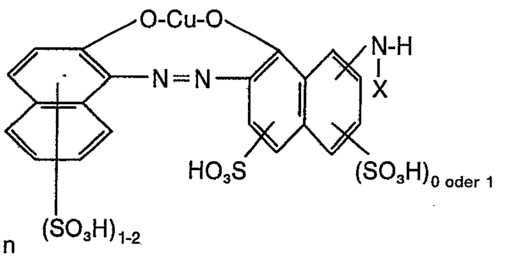

worin
X = 2-Fluor-5,6-dichlorpyrimidin-4-yl.

Die Erfindung betrifft weiterhin die Verwendung der Farbstoffe gemäss Gruppen 1 bis 7 zum Färben und Bedrucken von amid- und hydroxylgruppenhaltigen Materialien.

Aus US-A 3 882 263 (siehe dort Beispiel 327) ist ein Azoreaktivfarbstoff enthaltend die 2-Fluor-5,6-dichlorpyrimidin-4-yl-Reaktivgruppe bekannt. Aus LU-A 59 203, DE-C 1 664 204 und DE-C 2 232 541 sind ähnlich strukturierte Farbstoffe enthaltend den 1,6-Difluor-5-chlorpyrimidin-4-yl-Rest bekannt. Demgegenüber zeigen die erfindungsgemässen Farbstoffe in überraschendem Masse überlegene färberische Eigenschaften.

Die neuen Farbstoffe der Gruppen 1 bis 7 sind nach dem für Reaktivazofarbstoffe bekannten Herstellungsverfahren zugänglich.

1. So werden Farbstoffe der Gruppen 1 bis 7, welche anstelle der $-\underset{X}{\underset{|}{N}}-H$-Gruppe die $-NH_2$-Gruppe enthalten, mit 2,4-Difluor-5,6-dichlor-pyrimidin kondensiert.

2. Die Reaktivgruppe wird zuerst in die Diazo- und/oder Kupplungskomponente eingeführt, und dann erfolgt der Aufbau unter Azokupplung.

Die Umsetzung mit der Reaktivkomponente erfolgt im organisch-wässrigen, vorzugsweise wässrigen System bei 0–60°, vorzugsweise 10–30°, wobei die bei der Kondensation freiwerdende Flusssäure durch säurebindende Mittel wie die Hydroxide, Hydrogencarbonate und Carbonate der Alkali- und Erdalkalimetalle, beispielsweise Natriumhydroxid, Natriumhydrogencarbonat, Natriumcarbonat, Kaliumcarbonat, Magnesiumcarbonat, abgefangen wird.

Metallisierung und Acylierung können im allgemeinen in austauschbarer Reihenfolge vorgenommen werden.

Die Farbstoffe der Gruppen 1 bis 7 ergeben nach den für Reaktivfarbstoffe bekannten Applikationsverfahren Färbungen bzw. Drucke auf amid- und hydroxylgruppenhaltigen Materialien, die eine hohe Festigkeit der Bindung zwischen Faser und Farbstoff aufweisen. Weiterhin zeichnen sich die Farbstoffe durch eine hohe Fixierausbeute und leichte Auswaschbarkeit des nicht fixierten Anteils aus.

Die angegebenen Formeln sind die der freien Säuren. Bei der Herstellung erhält man im allgemeinen die Salze, insbesondere die Alkalisalze wie die Natriumsalze.

Beispiel 1

23,9 g 1-Hydroxy-3-sulfo-6-amino-naphthalin werden in 400 ml Wasser neutral gelöst. Bei 20–25° tropft man 18,5 g 2,4-Difluor-5,6-dichlor-pyrimidin ein, wobei mit verdünnter Natronlauge der pH zwischen 4 und 5 gehalten wird. Nach beendigter Acylierung setzt man bei pH 6 die aus 20,3 g 1-Amino-2-sulfo-4-methoxy-benzol bereitete Diazotierung zu. Nach dem Aussalzen, Absaugen, Trocknen und Mahlen erhält man ein rotes wasserlösliches Farbstoffpulver, das nach einem der für Reaktivfarbstoffe üblichen Applikationsverfahren ein klares Scharlach auf Baumwolle färbt. Der Farbstoff entspricht der Formel

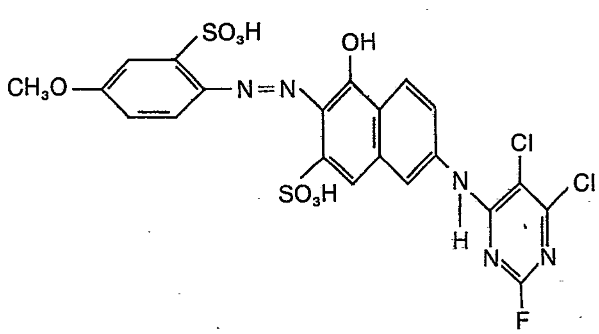

Nach der Arbeitsweise dieses Beispiels erhält man unter Verwendung der nachfolgend genannten Diazokomponenten gleichfalls wertvolle Reaktivfarbstoffe.

| Beispiel | Diazokomponente | Farbton |
|---|---|---|
| 2 | 1-Amino-2-sulfo-4-ethoxy-benzol | Scharlach |
| 3 | 1-Amino-2-sulfo-benzol | Orange |
| 4 | 1-Amino-2-sulfo-4-methyl-benzol | Orange |
| 5 | 1-Amino-2-sulfo-4-chlor-benzol | Orange |
| 6 | 1-Amino-2,5-disulfo-4-methoxy-benzol | Scharlach |
| 7 | 1-Amino-2,5-disulfo-benzol | Orange |
| 8 | 2-Amino-1-sulfo-naphthalin | Orange |
| 9 | 2-Amino-1,5-disulfo-naphthalin | Orange |
| 10 | 2-Amino-1,5,7-trisulfo-naphthalin | Orange |
| 11 | 2-Amino-3,6-disulfo-naphthalin | Scharlach |
| 12 | 2-Amino-3,6,8-trisulfo-naphthalin | Scharlach |

Beispiel 13

43,8 g 8-(4′-Aminobenzoylamino)-1-hydroxy-3,6-disulfonaphthalin werden in 400 ml Wasser gelöst. Bei pH 4–5 und 25–30° tropft man 18,5 g 2,4-Difluor-5,6-dichlorpyrimidin ein. Nach beendigter Kondensation wird die aus 17,3 g 1-Amino-2-sulfobenzol bereitete Diazotierung zugesetzt und die Kupplung durch Einstellen eines pH-Wertes von 6–7 ausgeführt. Aus der klaren roten Lösung wird der Farbstoff durch Kochsalz abgeschieden, abgesaugt, getrocknet und gemahlen. Es resultiert ein rotes wasserlösliches Farbstoffpulver, das nach einem der für Reaktivfarbstoffe üblichen Applikationsverfahren klare rote Färbungen gibt. Der Farbstoff entspricht der Formel

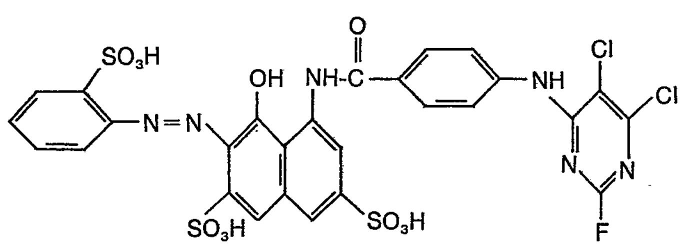

Nach der Arbeitsweise dieses Beispiels geben die nachfolgend aufgeführten Diazokomponenten gleichfalls wertvolle Reaktivfarbstoffe, wobei anstelle der 4′-Aminobenzoylamino-Verbindung ebenfalls die entsprechende 3′-Aminobenzoylamino-Verbindung verwendet werden kann.

| Beispiel | Diazokomponente | Farbton |
|---|---|---|
| 14 | 1-Amino-2-sulfo-4-methyl-benzol | blaust. Rot |
| 15 | 1-Amino-2,5-disulfo-benzol | Rot |
| 16 | 1-Amino-benzol | Rot |
| 17 | 1-Amino-2-sulfo-4-chlor-benzol | Rot |
| 18 | 1-Amino-4-sulfo-benzol | Rot |
| 19 | 1-Amino-2,5-disulfo-4-methoxy-benzol | blaust. Rot |
| 20 | 1-Amino-2-sulfo-4-methoxy-benzol | blaust. Rot |
| 21 | 2-Amino-1-sulfo-naphthalin | blaust. Rot |
| 22 | 2-Amino-1,5-disulfo-naphthalin | blaust. Rot |
| 23 | 2-Amino-1,5,7-trisulfo-naphthalin | blaust. Rot |

Beispiel 24

25,2 g 2-Amino-1-sulfo-5-aminomethyl-naphthalin werden in 500 ml Eiswasser mit 28 ml konzentrierter Salzsäure verrührt. Man tropft eine Lösung, die 7 g Natriumnitrit enthält, ein. Nach Entfernen des Überschusses an Nitrit mit Amidosulfosäure wird die Diazotierung zu einer Anschlämmung von 42,8 g 8-Benzoylamino-1-hydroxy-3,5-disulfo-naphthalin, 28 g Natriumhydrogencarbonat in 200 ml Wasser gegeben. Nach beendigter Kupplung wird der Farbstoff abgesaugt und die feuchte Phase in 1 Liter Wasser von 15–20° angerührt. Man tropft dann 18,5 g 2,4-Difluor-5,6-dichlorpyrimidin ein und hält den pH zwischen 8 und 9 mit verdünnter Natronlauge. Aus der Lösung, die während der Acylierung entstanden ist, wird der Farbstoff ausgesalzen, abgesaugt, getrocknet und gemahlen. Das rote Farbstoffpulver ist in Wasser leicht löslich. Der Farbstoff entspricht der Formel

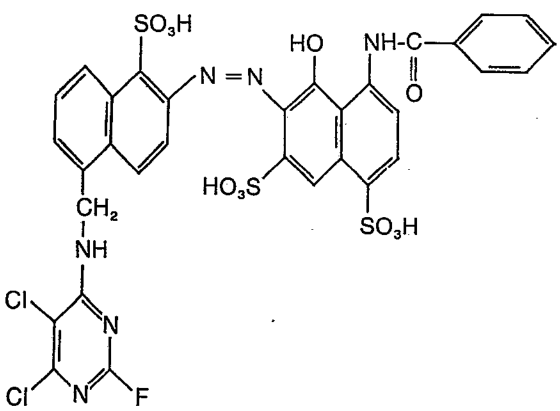

Nach einem der für Reaktivfarbstoffe üblichen Applikationsverfahren erhält man damit auf Baumwolle klare blaustichig rote Färbungen.

Nach der Arbeitsweise dieses Beispiels erhält man unter Verwendung von 8-Benzoylamino-1-hydroxy-3,6-disulfonaphthalin als Kupplungskomponente einen wertvollen blaustichig roten Farbstoff.

Beispiel 25

71 g des Kupferkomplexfarbstoffes aus 1-Hydroxy-4,6,8-trisulfonaphthalin-<2-azo-2>-hydroxy-3-sulfo-6-aminonaphthalin werden in 1 Liter Eiswasser angerührt. Man tropft innerhalb 15 Minuten 18,5 g 2,4-Difluor-5,6-dichlor-pyrimidin ein, wobei man durch gleichzeitige Zugabe von 20%iger Sodalösung den pH-Wert zwischen 5 und 6 hält. Nach dem Aussalzen, Filtrieren, Trocknen und Mahlen erhält man ein rotes Farbstoffpulver, das sich leicht in Wasser mit violetter Färbe löst.

Der Farbstoff entspricht der Formel

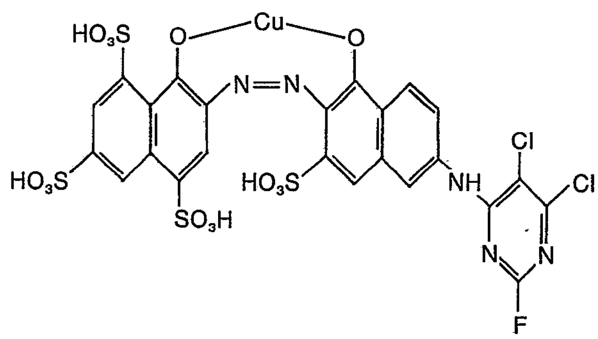

Nach einem der für Reaktivfarbstoffe üblichen Färbeverfahren erhält man damit violette Färbungen auf Baumwolle.

Statt durch Aussalzen kann der Farbstoff auch durch Eindampfen des Reaktionsgemisches oder durch Sprühtrocknung isoliert werden.

Der für dieses Beispiel als Ausgangsmaterial verwendete Aminoazofarbstoff wird erhalten durch Diazotieren von 2-Amino-4,6,8-trisulfonaphthalin, Kupplung auf Acetyl-I-säure, oxidative Kupferung und anschliessende Verseifung der Acetylgruppe.

Wenn man nach den Angaben dieses Beispiels verfährt, jedoch anstelle des dort verwendeten Aminoazofarbstoffs Verbindungen einsetzt, die durch Diazotieren der in Spalte 1 aufgeführten Diazokomponenten, Kupplung mit den in Spalte 2 genannten Kupplungskomponenten, oxidative Kupferung und anschliessende Verseifung erhältlich sind, so resultieren gleichfalls weitere wertvolle Farbstoffe, die Baumwolle in der angegebenen Nuance färben.

| Beispiel | Diazokomponente | Kupplungskomponente | Farbton auf Baumwolle |
|---|---|---|---|
| 26 | 2-Amino-4,8-disulfo-naphthalin | 11-Hydroxy-6-acetylamino-4,8-disulfo-naphthalin | blaustichig Violett |
| 27 | 2-Amino-4,6,8-trisulfo-naphthalin | 1-Hydroxy-6-acetylamino-4,8-disulfo-naphthalin | blaustichig Violett |
| 28 | 1-Amino-4,6-disulfo-naphthalin | 1-Hydroxy-6-acetylamino-4,8-disulfo-naphthalin | rotstichig Blau |
| 29 | 1-Amino-4,7-disulfo-naphthalin | 1-Hydroxy-6-acetylamino-4,8-disulfo-naphthalin | rotstichig Blau |
| 30 | 2-Amino-4,8-disulfo-naphthalin | 1-Hydroxy-3-sulfo-6-acetylamino-naphthalin | Bordeaux |
| 31 | 2-Amino-6,8-disulfo-naphthalin | 1-Hydroxy-3-sulfo-6-acetylamino-naphthalin | Bordeaux |
| 32 | 1-Amino-4,6-disulfo-naphthalin | 1-Hydroxy-3-sulfo-6-acetylamino-naphthalin | Violett |

| Beispiel | Diazokomponente | Kupplungskomponente | Farbton auf Baumwolle |
|---|---|---|---|
| 33 | 1-Amino-4,7-disulfo-naphthalin | 1-hydroxy-3-sulfo-6-acetylamino-naphthalin | Violett |
| 34 | 2-Amino-4,8-disulfo-naphthalin | 1-Hydroxy-3-sulfo-7-acetylamino-naphthalin | Violett |
| 35 | 2-Amino-4,6,8-trisulfo-naphthalin | 1-Hydroxy-3-sulfo-7-acetylamino-naphthalin | Violett |
| 36 | 1-Amino-4,7-disulfo-naphthalin | 1-Hydroxy-3-sulfo-7-acetylamino-naphthalin | Violett |
| 37 | 1-Amino-4,6-disulfo-naphthalin | 1-Hydroxy-3-sulfo-7-acetylamino-naphthalin | Violett |

Beispiel 38

74,5 g des Farbstoffs 4,8-Disulfo-naphthalin <2 azo 2> 1-hydroxy-3,6-disulfo-8-(2'-fluor-5',6'-dichlor-pyrimidinyl-(4')-amino)-naphthalin werden in 1 Liter Wasser angerührt und mit 28 g $CuSO_4$.5 $H_2O$ und 42 g NaAc.3 $H_2O$ versetzt. Man tropft dann 3%ige $H_2O_2$-Lösung zu bis die oxidative Kupferung beendet ist. Der Farbstoff wird ausgesalzen, abfiltriert, getrocknet und gemahlen. Man erhält ein schwarz-blaues Pulver, das sich leicht in Wasser mit blauer Farbe löst. Der Farbstoff entspricht der Formel

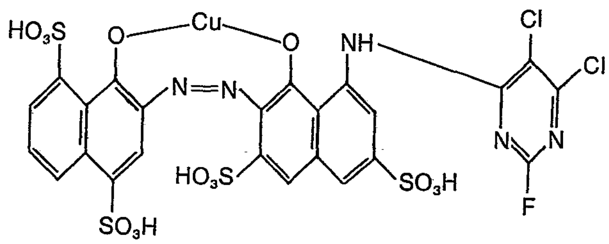

und färbt Baumwolle nach einem der für Reaktivfarbstoffe üblichen Applikationsverfahren blau.

Der für dieses Beispiel verwendete metallfreie Azofarbstoff kann hergestellt werden durch Diazotierung von 2-Amino-4,8-disulfo-naphthalin, Kupplung mit dem Kondensationsprodukt aus 1-Amino-8-hydroxy-3,6-disulfonaphthalin und 2,4-Difluor-5,6-dichlor-pyrimidin.

Beispiel 39

74,5 g des Farbstoffs 4,8-Disulfo-naphthalin <2 azo 2> 1-hydroxy-3,5-disulfo-8-(2'-fluor-5',6'-dichlor-pyrimidinyl-(4')-amino)-naphthalin werden in 1 Liter Wasser angerührt und mit 28 g $CuSO_4$.5 $H_2O$ und 42 g NaAc.3 $H_2O$ versetzt. Man tropft dann 3%ige $H_2O_2$-Lösung zu bis die oxidative Kupferung beendet ist. Der Farbstoff wird ausgesalzen, abfiltriert, getrocknet und gemahlen. Man erhält ein schwarz-blaues Pulver, das sich leicht in Wasser mit blauer Farbe löst. Der Farbstoff entspricht der Formel

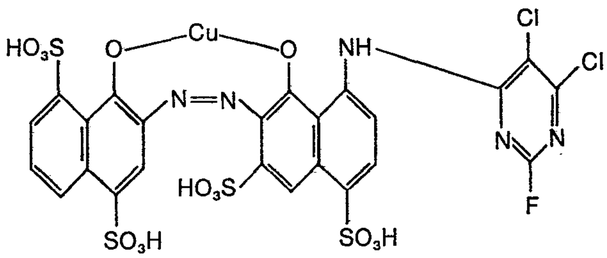

und färbt Baumwolle nach einem der für Reaktivfarbstoffe üblichen Applikationsverfahren blau.

Der für dieses Beispiel verwendete metallfreie Azofarbstoff kann hergestellt werden durch Diazotierung von 2-Amino-4,8-disulfo-naphthalin, Kupplung mit dem Kondensationsprodukt aus 1-Amino-8-hydroxy-3,5-disulfonaphthalin und 2,4-Difluor-5,6-dichlor-pyrimidin.

Wenn man nach den Angaben dieses Beispiels verfährt, jedoch anstelle des dort verwendeten kupferfreien Farbstoffs Verbindungen einsetzt, die durch Diazotieren der in Spalte 1 aufgeführten Diazokomponenten, Kupplung mit den in Spalte 2 genannten Kupplungskomponenten und Acylierung erhältlich sind, so resultieren gleichfalls weitere wertvolle Farbstoffe, die Baumwolle in der angegebenen Nuance färben.

| Beispiel | Diazokomponente | Kupplungskomponente | Farbton auf Baumwolle |
|---|---|---|---|
| 40 | 2-Amino-5-sulfo-naphthalin | 1-Hydroxy-8-(2′-fluor-5′,6′-dichlor-pyrimidinyl-(4′)-amino)-3,5-disulfo-naphthalin | Blau |
| 41 | 2-Amino-4,6,8-trisulfo-naphthalin | 1-Hydroxy-8-(2′-fluor-5′,6′-dichlor-pyrimidinyl-(4′)-amino)-3,5-disulfo-naphthalin | Blau |
| 42 | 2-Amino-3,6-disulfo-naphthalin | 1-Hydroxy-8-(2′-fluor-5′,6′-dichlor-pyrimidinyl-(4′)-amino)-3,5-disulfo-naphthalin | Blau |
| 43 | 2-Amino-6,8-disulfo-naphthalin | 1-Hydroxy-8-(2′-fluor-5′,6′-dichlor-pyrimidinyl-(4′)-amino)-3,5-disulfo-naphthalin | Blau |
| 44 | 2-Amino-5,7-disulfo-naphthalin | 1-Hydroxy-8-(2′-fluor-5′,6′-dichlor-pyrimidinyl-(4′)-amino)-3,5-disulfo-naphthalin | Blau |
| 45 | 1-Amino-4,6-disulfo-naphthalin | 1-Hydroxy-8-(2′-fluor-5′,6′-dichlor-pyrimidinyl-(4′)-amino)-3,5-disulfo-naphthalin | Blau |
| 46 | 1-Amino-4,7-disulfo-naphthalin | 1-Hydroxy-8-(2′-fluor-5′,6′-dichlor-pyrimidinyl-(4′)-amino)-3,5-disulfo-naphthalin | Blau |
| 47 | 1-Amino-3,6-disulfo-naphthalin | 1-Hydroxy-8-(2′-fluor-5′,6′-dichlor-pyrimidinyl-(4′)-amino)-3,5-disulfo-naphthalin | Blau |
| 48 | 2-amino-5-sulfo-naphthalin | 1-Hydroxy-8-(2′-fluor-5′,6′-dichlor-pyrimidinyl-(4′)-amino)-3,6-disulfo-naphthalin | Blau |
| 49 | 2-Amino-4,6,8-trisulfo-naphthalin | 1-Hydroxy-8-(2′-fluor-5′,6′-dichlor-pyrimidinyl-(4′)-amino)-3,6-disulfo-naphthalin | Blau |
| 50 | 2-Amino-3,6-disulfo-naphthalin | 1-Hydroxy-8-(2′-fluor-5′,6′-dichlor-pyrimidinyl-(4′)-amino)-3,6-disulfo-naphthalin | Blau |
| 51 | 2-Amino-6,8-disulfo-naphthalin | 1-Hydroxy-8-(2′-fluor-5′,6′-dichlor-pyrimidinyl-(4′)-amino)-3,6-disulfo-naphthalin | Blau |
| 52 | 2-Amino-5,7-disulfo-naphthalin | 1-Hydroxy-8-(2′-fluor-5′,6′-dichlor-pyrimidinyl-(4′)-amino)-3,6-disulfo-naphthalin | Blau |
| 53 | 1-Amino-4,6-disulfo-naphthalin | 1-Hydroxy-8-(2′-fluor-5′,6′-dichlor-pyrimidinyl-(4′)-amino)-3,6-disulfo-naphthalin | Blau |
| 54 | 1-Amino-4,7-disulfo-naphthalin | 1-Hydroxy-8-(2′-fluor-5′,6′-dichlor-pyrimidinyl-(4′)-amino)-3,6-disulfo-naphthalin | Blau |
| 55 | 1-Amino-3,6-disulfo-naphthalin | 1-Hydroxy-8-(2′-fluor-5′,6′-dichlor-pyrimidinyl-(4′)-amino)-3,6-disulfo-naphthalin | Blau |

Beispiel 56

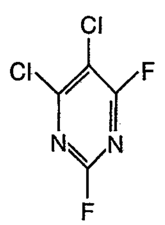

In einem Stahlautoklav werden 665 g Tetrachlorpyrimidin vorgelegt und bei 5–10 °C 360 ml HF wasserfrei zulaufen gelassen. Nach Verschliessen des Autoklavs wird ein Schutzdruck von ca. 5 bar $N_2$ aufgedrückt und dann langsam hochgeheizt. Die um 80–90° einsetzende HCl-Entwicklung verläuft ab 100° zügig. Durch ein Entspannungsventil wird der Druck bei 28 bar konstant gehalten. Bei 160°/28 bar lässt man den Ansatz ausreagieren und kühlt nach Beendigung der HCl-Entwicklung ab. Die Aufarbeitung erfolgt durch Destillation. Man erhält 525 g Rohdestillat der Zusammensetzung lt.GC:

25,8% 2,4,6-Trifluor-5-chlorpyrimidin
49,3% 2,4-Difluor-5,6-dichlorpyrimidin
22,7% Monofluor-trichlorpyrimidin
1,8% Ausgangsmaterial

Durch fraktionierte Destillation erhält man 253 g 2,4-Difluor-5,6-dichlorpyrimidin vom Kp 156°, $n_D^{20}$ 1,4908.

**Patentansprüche**

1. Farbstoffe der Formel

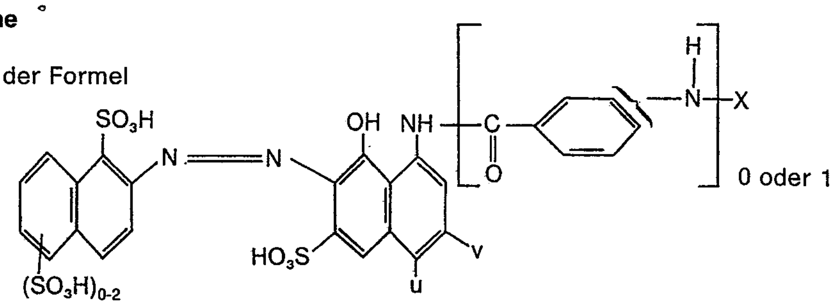

worin
u und v = H oder $SO_3H$ und
u und v verschieden sind,
x = 2-Fluor-5,6-dichlorpyrimidin-4-yl.

2. Farbstoffe der Formel

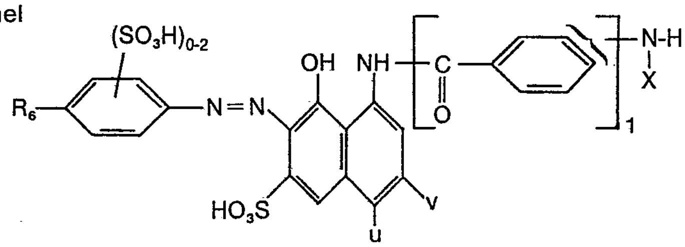

worin
u und v = H oder $SO_3H$ und
u und v verschieden sind
$R_6$ = H, $C_1$–$C_4$-Alkyl, $C_1$–$C_4$-Alkoxy, Cl oder Acetylamino,
X = 2-Fluor-5,6-dichlorpyrimidin-4-yl.

3. Farbstoffe der Formel

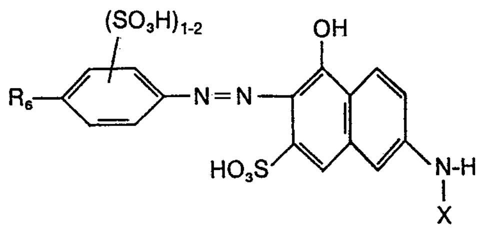

worin
$R_6$ = H, $C_1$–$C_4$-Alkyl, $C_1$–$C_4$-Alkoxy, Cl, Acetylamino
X = 2-Fluor-5,6-dichlorpyrimidin-4-yl.

4. Farbstoffe der Formel

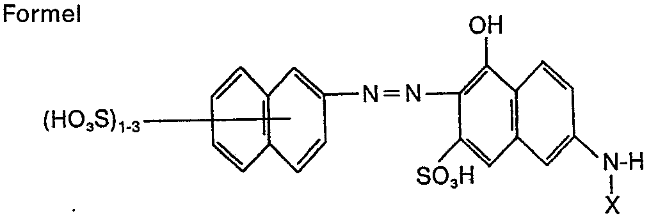

worin
X = 2-Fluor-5,6-dichlorpyrimidin-4-yl.

5. Farbstoffe der Formel

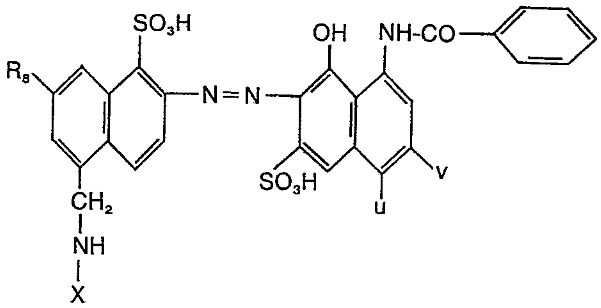

worin
$R_8$ = H oder $SO_3H$,
u ≠ v und gleich H oder $SO_3$ H
X = 2-Fluor-5,6-dichlorpyrimidin-4-yl.

6. Farbstoffe der Formel

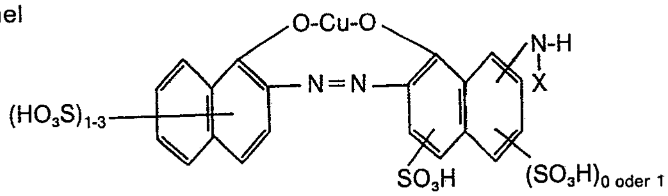

worin
X = 2-Fluor-5,6-dichlorpyrimidin-4-yl.

7. Farbstoffe der Formel

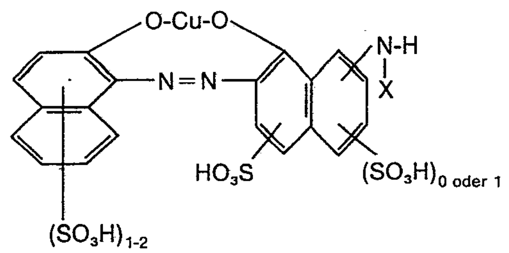

worin
X = 2-Fluor-5,6-dichlorpyrimidin-4-yl.

8. Verwendung der Farbstoffe der Ansprüche 1 bis 7 zum Färben und Bedrucken von amid- und hydroxylgruppenhaltigen Materialien.

**Claims**

1. Dyestuffs of the formula

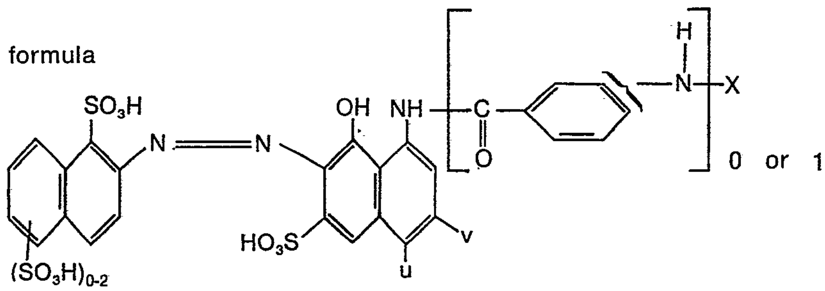

wherein
u and v = H or $SO_3H$ and
u and v are different, and
x = 2-fluoro-5,6-dichloropyrimidin-4-yl.

2. Dyestuffs of the formula

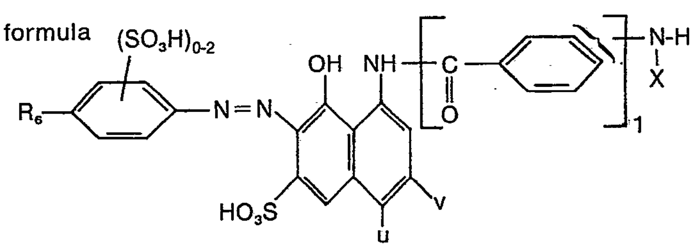

wherein
u and v = H or $SO_3H$ and
u and v are different,
$R_6$ = H, $C_1$–$C_4$-alkyl, $C_1$–$C_4$-alkoxy, Cl or acetylamino and
X = 2-fluoro-5,6-dichloropyrimidin-4-yl.

3. Dyestuffs of the formula

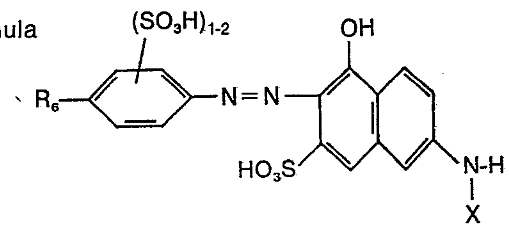

wherein
$R_6$ = H, $C_1$–$C_4$-alkyl, $C_1$–$C_4$-alkoxy, Cl or acetylamino, and
X = 2-fluoro-5,6-dichloropyrimidin-4-yl.

4. Dyestuffs of the formula

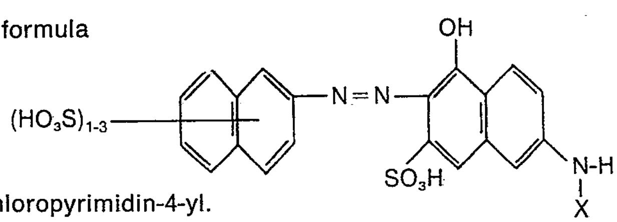

wherein
X = 2-fluoro-5,6-dichloropyrimidin-4-yl.

5. Dyestuffs of the formula

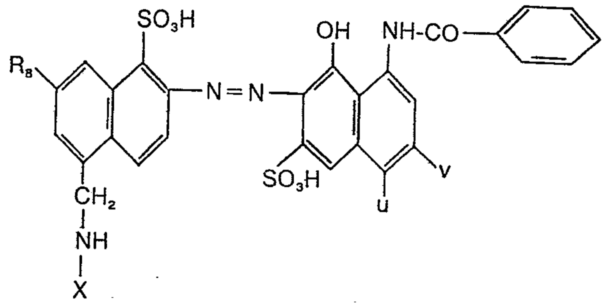

wherein
$R_8$ = H or $SO_3H$,
u ≠ v and are H or $SO_3H$,
X = 2-fluoro-5,6-dichloropyrimidin-4-yl.

6. Dyestuffs of the formula

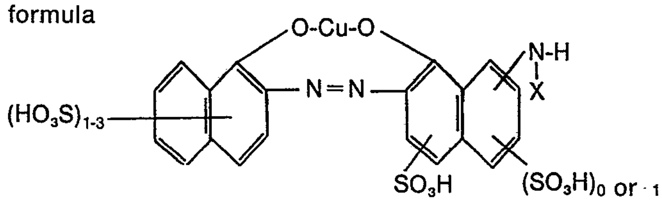

wherein
X = 2-fluoro-5,6-dichloropyrimidin-4-yl.

7. Dyestuffs of the formula

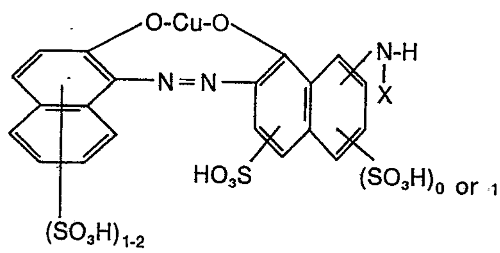

wherein
X = 2-fluoro-5,6-dichloropyrimidin-4-yl.

8. Use of the dyestuffs of Claims 1 to 7 for dyeing and printing materials containing amide groups or hydroxyl groups.

**Revendications**

1. Colorants de formule

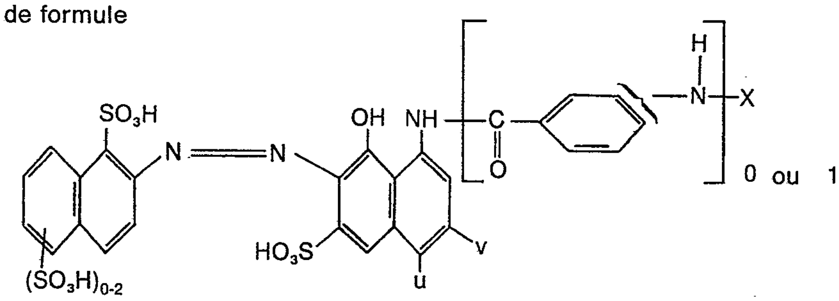

dans laquelle
u et v = H ou $SO_3H$ et
u et v sont différents,
X = 2-fluoro-5,6-dichloropyrimidine-4-yle.

2. Colorants de formule

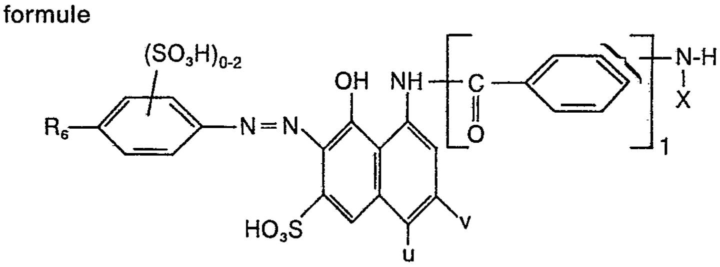

dans laquelle
u et v = H ou $SO_3H$ et
u et v sont différents,

$R_6$ = H, alkyle en $C_1$–$C_4$, alcoxy en $C_1$–$C_4$, Cl ou acétylamino,
X = 2-fluoro-5,6-dichloropyrimidine-4-yle.

3. Colorants de formule

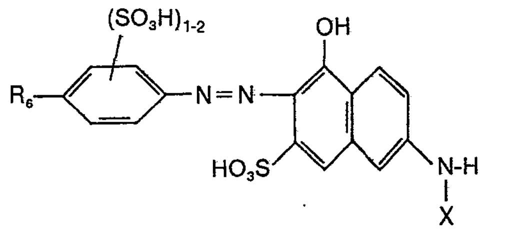

dans laquelle
$R_6$ = H, alkyle en $C_1$–$C_4$, alcoxy en $C_1$–$C_4$, Cl, acétylamino,
X = 2-fluoro-5,6-dichloropyrimidine-4-yle.

4. Colorants de formule

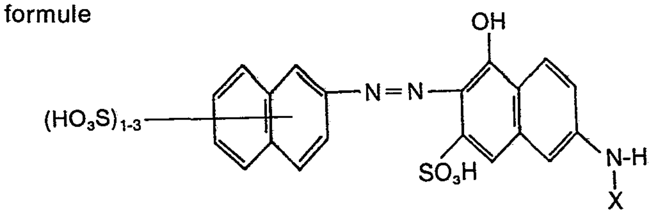

dans laquelle
X = 2-fluoro-5,6-dichloropyrimidine-4-yle.

5. Colorants de formule

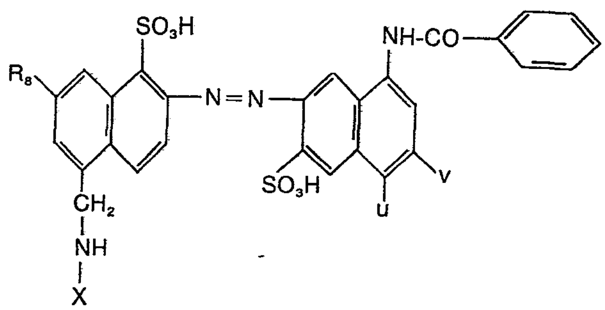

dans laquelle
$R_8$ = H ou $SO_3H$
u ≠ v et sont H ou $SO_3H$
X = 2-fluoro-5,6-dichloropyrimidine-4-yle.

6. Colorants de formule

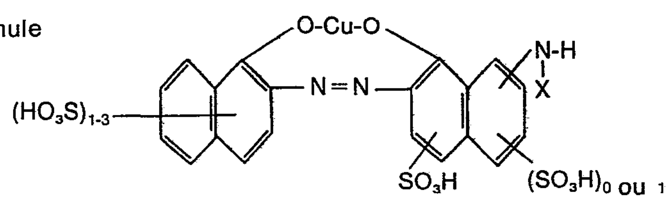

dans laquelle
X = 2-fluoro-5,6-dichloropyrimidine-4-yle.

7. Colorants de formule

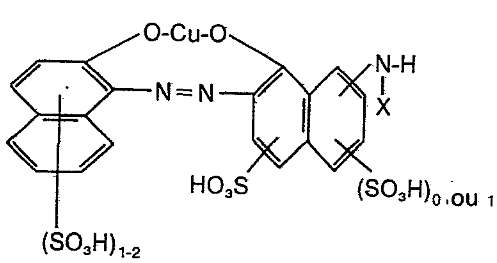

dans laquelle
X = 2-fluoro-5,6-dichloropyrimidine-4-yle.

8. Utilisation des colorants des revendications 1 à 7 pour la teinture et l'impression de matériaux contenant des groupes amides et hydroxyles.